# EUROPÄISCHE PATENTSCHRIFT

(11) **EP 1 486 591 B1**
(45) Veröffentlichungstag und Bekanntmachung des Hinweises auf die Patenterteilung: **16.11.2005**
(21) Anmeldenummer: 03013506.5
(22) Anmeldetag: 13.06.2003
(51) Int. Cl.: D01D 4/06

(54) **Vorrichtung zur Herstellung von Filamenten**
Apparatus for the production of filaments
Appareil pour la production de filaments

(43) Veröffentlichungstag der Anmeldung: 15.12.2004
(73) Patentinhaber: Reifenhäuser GmbH & Co. KG Maschinenfabrik, 53839 Troisdorf (DE)
(72) Erfinder: Baumeister, Michael, 53842 Troisdorf (DE)
(74) Vertreter: Rohmann, Michael

(56) Entgegenhaltungen:
- EP-A- 0 626 471
- EP-A- 0 677 600
- EP-A- 1 304 401

## Beschreibung

Die Erfindung betrifft eine Vorrichtung zur Herstellung von Filamenten insbesondere aus thermoplastischem Kunststoff, wobei die Filamente in zumindest einer sich über eine Ausspinnbreite erstreckenden Filamentreihe aus Spinndüsenöffnungen einer Spinndüsenplatte austreten. - Die Erfindung betrifft insbesondere eine Vorrichtung zur Herstellung von Spinnvliesen aus Filamenten aus thermoplastischem Kunststoff. Es liegt im Rahmen der Erfindung, dass die Filamente auf einer Fördervorrichtung, vorzugsweise auf einem Ablagesiebband abgelegt werden. Die Breite eines auf der Fördervorrichtung abgelegten aus den Filamenten bestehenden Produktes hängt ab von der Ausspinnbreite, das heißt von der Breite einer aus der Spinndüsenplatte austretenden Filamentreihe bzw. von aus der Spinndüsenplatte austretenden Filamentreihen. - Soweit nachfolgend der Begriff Förderrichtung verwendet wird, ist die Förderrichtung einer Fördervorrichtung für die Filamente bzw. das daraus bestehende Spinnvlies und somit die Richtung quer zur Ausspinnbreite gemeint.

Vorrichtungen zur Herstellung von Filamenten bzw. zur Herstellung von Spinnvliesen aus Filamenten werden normalerweise für eine bestimmte Produktbreite bzw. Vliesbahnbreite ausgelegt. Auf diese Produktbreite sind die Vorrichtungskomponenten abgestimmt. Im Zuge der Herstellung von Spinnvliesen für den Hygienebereich wird die Vliesbahn über ihre Breite in der Regel in eine Vielzahl schmaler Nutzen geschnitten, so dass nur ein relativ geringer restlicher Randbeschnitt anfällt. Bei der Herstellung von Spinnvliesen für verschiedene technische Anwendungen können in Abhängigkeit von der Anzahl und der Breite der zu schneidenden Abschnitte größere Abfallmengen anfallen. Dann ist es zweckmäßig, die Breite der erzeugten Produktbahn bzw. die Ausspinnbreite einzustellen.

Aus der Praxis ist es bekannt, die Ausspinnbreite an sogenannten segmentierten Vorrichtungen einzustellen. Diese bekannten Vorrichtungen bestehen aus einer Mehrzahl von über die Ausspinnbreite aneinandergereihten Verteilvorrichtungen in Form von kleineren Kleiderbügelverteilern und jeweils vorgeschalteten separaten Spinnpumpen. Den Kleiderbügelverteilern können jeweils separate Spinndüsen nachgeschaltet sein, die über die Ausspinnbreite aneinander gereiht sind. Die Einstellung der Ausspinnbreite erfolgt hier durch Abschalten bzw. Zuschalten einzelner Spinnpumpen bzw. einzelner Segmente der Vorrichtung. Damit ist aber der beachtliche Nachteil verbunden, dass der in einem abgeschalteten Segment verbleibende Kunststoff sich im Laufe der Zeit abbaut und zu Verunreinigungen in den Öffnungen bzw. Kanälen des Segmentes führen kann. Daraus resultieren langfristig Störungen des Vorrichtungsbetriebes bzw. Beeinträchtigungen der Qualität der erzeugten Warenbahnen.

Demgegenüber liegt der Erfindung das technische Problem zugrunde eine Vorrichtung der eingangs genannten Art anzugeben, bei der die Ausspinnbreite auf einfache und funktionssichere Weise einstellbar ist und bei der die vorgenannten Nachteile vermieden werden können.

Zur Lösung dieses technischen Problems lehrt die Erfindung eine Vorrichtung zur Herstellung von Filamenten aus thermoplastischem Kunststoff, wobei die Filamente in zumindest einer sich über eine Ausspinnbreite erstreckenden Filamentreihe aus den Spinndüsenöffnungen einer Spinndüsenplatte austreten,
wobei eine Verteilvorrichtung zur Verteilung einer zugeführten Kunststoffschmelze auf eine vorläufige Ausspinnbreite vorgesehen ist,
wobei der Verteilvorrichtung zumindest eine austauschbare Verteilerplatte mit einer Mehrzahl von über die Ausspinnbreite verteilten Verteileröffnungen nachgeschaltet ist, welche Verteileröffnungen zur Aufnahme der Kunststoffschmelze aus der Verteilvorrichtung vorgesehen sind,
wobei der Verteilerplatte die austauschbare Spinndüsenplatte nachgeschaltet ist, welche Spinndüsenplatte über eine endgültige Ausspinnbreite verteilte Spinndüsenkanäle mit den zugeordneten Spinndüsenöffnungen aufweist
und wobei die von den Verteileröffnungen gebildete Ausspinnbreite geringer ist oder größer ist als die vorläufige Ausspinnbreite und wobei mit Hilfe der Verteilerplatte die vorläufige Ausspinnbreite auf die endgültige Ausspinnbreite reduziert oder erweitert wird und durch Auswechseln der Verteilerplatte die gewünschte endgültige Ausspinnbreite einstellbar ist.

Ausspinnbreite meint nachfolgend zum einen die Gesamtbreite einer aus der Vorrichtung austretenden Filamentreihe und folglich die Breite der Reihe der zugeordneten Spinndüsenöffnungen. Hierbei handelt es sich um die sogenannte endgültige Ausspinnbreite. Mit Ausspinnbreite wird aber auch die Breite bezeichnet, über die sich die für die Herstellung der Filamente über Öffnungen und Kanäle zugeführte Kunststoffschmelze erstreckt. Daher definiert die Erstreckung bzw. die Breite einer Reihe von Verteileröffnungen einer Verteilerplatte eine dieser Verteilerplatte zugeordnete Ausspinnbreite. Insoweit verändert sich die Ausspinnbreite von der vorläufigen Ausspinnbreite (am Ende der Verteilvorrichtung) über die Ausspinnbreiten der Verteilerplatten bis zur endgültigen Ausspinnbreite an den Spinndüsenöffnungen.

Nach einer bevorzugten Ausführungsform ist in Bezug auf die Ausspinnbreite lediglich eine Verteilvorrichtung vorgesehen, der zweckmäßigerweise nur eine Spinnpumpe vorgeschaltet ist. Grundsätzlich liegt es aber auch im Rahmen der Erfindung, dass zwei oder mehr Verteilvorrichtungen über die Ausspinnbreite nebeneinander angeordnet sein können und dabei kann jeder Verteilvorrichtung eine separate Spinnpumpe vorgeschaltet sein. Wesentlich ist im Rahmen der Erfindung, dass die Verteilvorrichtung bzw. die Verteilvorrichtungen und alle Verteileröffnungen der Verteilerplatte bzw. der Verteilerplatten im Betrieb der Vorrichtung stets von Kunststoffschmelze durchströmt werden. Mit anderen Worten erfolgt im Gegensatz zu den aus dem Stand der Technik bekannten Maßnahmen keine Abschaltung von Vorrichtungssegmenten zur Einstellung der Ausspinnbreite. Vielmehr ist Kerngedanke der Erfindung, dass durch Austausch der Verteilerplatten und der Spinndüsenplatte bzw. durch geeignete Kombination von Verteilerplatten die Ausspinnbreite eingestellt werden kann. Das ist auf einfache Weise möglich und dabei werden die eingangs im Zusammenhang mit dem Stand der Technik geschilderten Nachteile effektiv vermieden.

Es liegt im Rahmen der Erfindung, dass in Förderrichtung bzw. quer zur Ausspinnbreite mehrere Filamentreihen hintereinander jeweils über die Ausspinnbreite erzeugt werden. Es versteht sich, dass dazu in Förderrichtung hintereinander angeordnete Reihen von Spinndüsenöffnungen vorgesehen sind. Es liegt dabei im Rahmen der Erfindung, dass die Spinndüsenöffnungen benachbarter Reihen versetzt zueinander angeordnet sind.

Nach sehr bevorzugter Ausführungsform, der im Rahmen der Erfindung ganz besondere Bedeutung zukommt, ist die Verteilvorrichtung als Kleiderbügelverteiler ausgebildet. Kleiderbügelverteiler für Kunststoffschmelzen sind aus dem Stand der Technik grundsätzlich bekannt. Bei einem Kleiderbügelverteiler erfährt ein in Bezug auf die Ausspinnbreite zunächst schmaler Zuführungskanal eine allmähliche Breitenzunahme, im vorliegenden Fall auf die vorläufige Ausspinnbreite, unter Berücksichtigung eines gleichmäßigen Strömungsprofils am Austritt.

Wie oben bereits dargelegt, liegt es im Rahmen der Erfindung durch geeignete Wahl und Austausch der Verteilerplatten und der Spinndüsenplatte die gewünschte Ausspinnbreite einzustellen. Zweckmäßigerweise sind die Verteileröffnungen der Verteilerplatten vertikal bzw. senkrecht zur Verteilerplattenfläche angeordnet und münden in Verteilerkanäle, die zu einer Erweiterung oder Reduzierung der eintrittsseitigen Spinnbreite führen. Die Auslegung der Verteileröffnungen und Verteilerkanäle erfolgt unter Berücksichtigung eines gleichmäßigen Strömungsprofils am Austritt. Die Erstreckung bzw. die Breite einer Reihe von Verteileröffnungen definiert die Ausspinnbreite für die jeweilige Verteilerplatte. Es liegt im Rahmen der Erfindung, dass jede Verteilerplatte quer zur Ausspinnbreite bzw. in Förderrichtung mehrere hintereinander angeordnete Reihen von Verteileröffnungen aufweist.

Nach einer bevorzugten Ausführungsform der Erfindung ist der Verteilvorrichtung eine Mehrzahl von austauschbaren Verteilerplatten nachgeschaltet, wobei die von den Verteileröffnungen der einzelnen Verteilerplatten jeweils gebildeten Ausspinnbreiten von der Verteilvorrichtung zur Spinndüsenplatte hin abnehmen. Die vorläufige Ausspinnbreite wird auf diese Weise zur endgültigen Ausspinnbreite reduziert. Nach dieser Ausführungsform verringert sich also die Ausspinnbreite von Verteilerplatte zu Verteilerplatte zur Spinndüsenplatte hin.

Nach einer anderen bevorzugten Ausführungsform der Erfindung ist der Verteilvorrichtung eine Mehrzahl von austauschbaren Verteilerplatten nachgeschaltet, wobei die von den Verteileröffnungen der einzelnen Verteilerplatten jeweils gebildeten Ausspinnbreiten von der Verteilvorrichtung zur Spinndüsenplatte hin zunehmen. Die vorläufige Ausspinnbreite wird auf diese Weise zur endgültigen Ausspinnbreite erweitert bzw. vergrößert. Die Ausspinnbreite nimmt also von Verteilerplatte zu Verteilerplatte zur Spinndüsenplatte hin zu.

Es liegt im Rahmen der Erfindung, dass die Verteileröffnungen übereinander angeordneter benachbarter Verteilerplatten bezüglich der Ausspinnbreite versetzt zueinander angeordnet sind. Übereinander angeordnet meint hier in Strömungsrichtung der Kunststoffschmelze übereinander angeordnet bzw. zwischen Verteilvorrichtung und Spinndüsenplatte übereinander angeordnet.

Nach sehr bevorzugter Ausführungsform, der im Rahmen der Erfindung ganz besondere Bedeutung zukommt, weist eine Verteilerplatte zumindest einen sich über zumindest einen Teil der Ausspinnbreite erstreckenden Verteilerkanal auf, welcher Verteilerkanal zumindest einen Teil der Verteileröffnungen dieser Verteilerplatte miteinander verbindet. Es liegt im Rahmen der Erfindung, dass der Verteilerkanal die bezüglich der Ausspinnbreite in einer Reihe angeordneten Verteileröffnungen miteinander verbindet. Zweckmäßigerweise erstreckt sich der Verteilerkanal über die gesamte Ausspinnbreite der Verteilerplatte und verbindet dabei bevorzugt alle in einer Reihe angeordneten Verteileröffnungen dieser Verteilerplatte. Vorzugsweise ist ein Verteilerkanal horizontal bzw. senkrecht zu den Verteileröffnungen angeordnet. Es liegt im Rahmen der Erfindung, dass ein Verteilerkanal einer Verteilerplatte unmittelbar an eine benachbarte Verteilerplatte angrenzt.

Das ist zumindest für einen Teil der Verteilerplatten der Fall. Ein an eine benachbarte Verteilerplatte angrenzender Verteilerkanal verbindet zweckmäßigerweise zumindest einen Teil der in einer Reihe angeordneten Verteileröffnungen der benachbarten Verteilerplatte, vorzugsweise alle in einer Reihe angeordneten Verteileröffnungen dieser benachbarten Verteilerplatte.

Es liegt im Rahmen der Erfindung, dass eine Verteilerplatte mehrere nebeneinander angeordnete Reihen von Verteileröffnungen aufweist. Dabei erstreckt sich jede Reihe von Verteileröffnungen zweckmäßigerweise über die Ausspinnbreite der jeweiligen Verteilerplatte. Vorzugsweise sind die Verteileröffnungen von zwei in Förderrichtung nebeneinander angeordneten Reihen von Verteileröffnungen versetzt zueinander angeordnet. Nach sehr bevorzugter Ausführungsform der Erfindung sind die Verteileröffnungen jeder Reihe durch einen Verteilerkanal miteinander verbunden.

Vorzugsweise ist zwischen der Verteilvorrichtung und einer Verteilerplatte eine Lochplatte (Filterplatte oder Filterunterstützungsplatte) mit Lochkanälen für die Kunststoffschmelze zwischengeschaltet. Diese Lochplatte dient zur Unterstützung eines Filters (Filterlage, Filtersieb) im englischsprachigen Raum wird diese Lochplatte auch als "screen support plate" bezeichnet.

Nach sehr bevorzugter Ausführungsform der Erfindung ist im Übrigen über die Breite der Verteilvorrichtung eine Mehrzahl von Heizzonen für die Verteilvorrichtung vorgesehen, welche Heizzonen jeweils separat beheizbar sind. Zweckmäßigerweise ist dabei jeder Heizzone eine Heizvorrichtung zugeordnet, die separat auf eine bestimmte Heiztemperatur eingestellt werden kann. Mit Hilfe der Heizzonen bzw. Heizvorrichtungen kann die Viskosität bzw. Vliesgeschwindigkeit der Kunststoffschmelze in der erfindungsgemäßen Vorrichtung überraschend effektiv beeinflusst werden.

Der Erfindung liegt die Erkenntnis zugrunde, dass bei der erfindungsgemäßen Vorrichtung eine sehr einfache und funktionssichere Einstellung verschiedener (endgültiger) Ausspinnbreiten möglich ist, ohne dass langfristig Beeinträchtigungen des Betriebes der Vorrichtung oder der Qualität der hergestellten Produkte resultieren. Die zu den aus dem Stand der Technik bekannten Vorrichtungen geschilderten Nachteile werden effektiv vermieden. Erfindungsgemäß werden im Betrieb der Vorrichtung stets alle Verteileröffnungen, Verteilerkanäle und Spinndüsenöffnungen von Kunststoffschmelze durchströmt und somit auch durchspült. Ein Festsetzen von Verunreinigungen in diesen Öffnungen und Kanälen kann deshalb wirksam vermieden werden. Hervorzuheben ist auch, dass sich die erfindungsgemäße Vorrichtung sowohl für Monokomponentenfilamente als auch für Bikomponentenfilamente bzw. Mehrkomponentenfilamente eignet.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch eine erfindungsgemäße Vorrichtung in einem ersten Betriebszustand,
- Fig. 2: den Gegenstand nach Fig. 1 in einem zweiten Betriebszustand,
- Fig. 3: eine erfindungsgemäße Verteilerplatte und
- Fig. 4: eine Spinndüsenplatte für die erfindungsgemäße Vorrichtung.

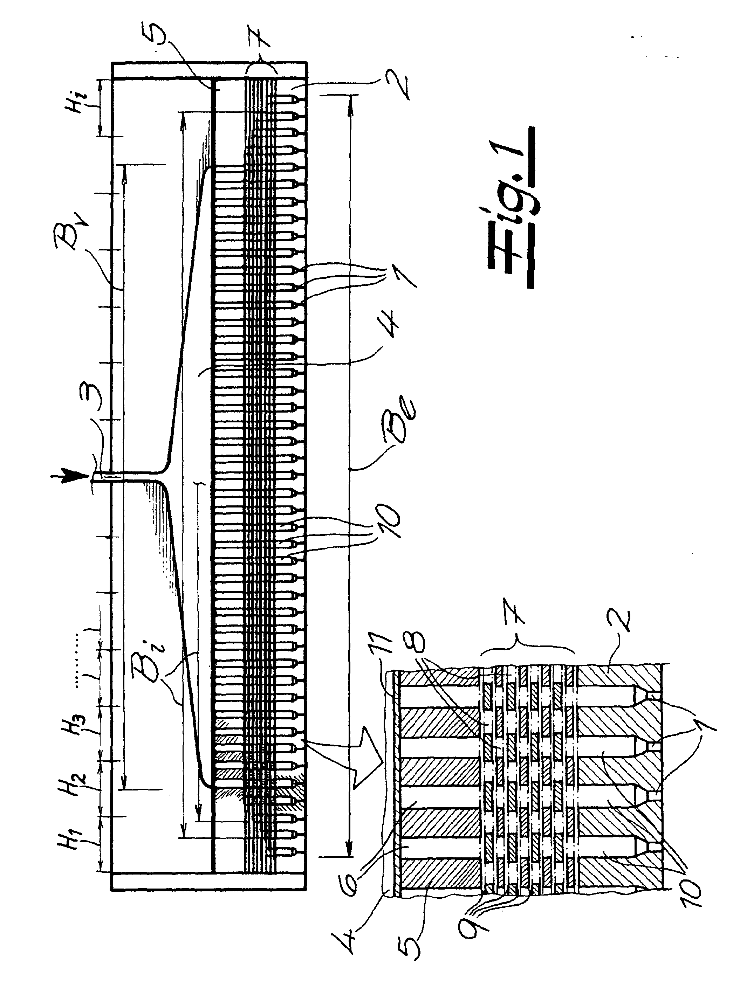

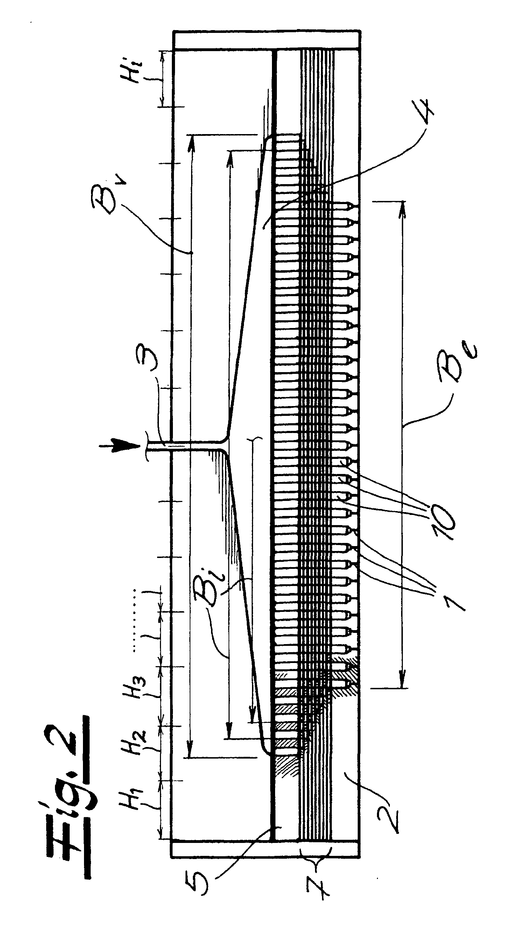

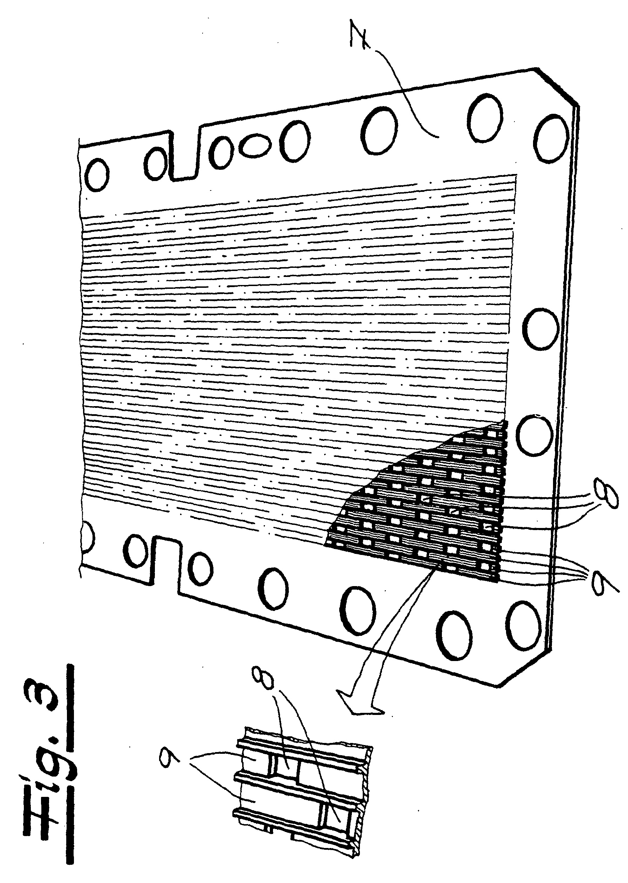

Die Figuren zeigen eine Vorrichtung zur Herstellung von nicht dargestellten Filamenten aus thermoplastischem Kunststoff. Im Ausführungsbeispiel treten diese Filamente in mehreren sich über eine Ausspinnbreite Bₑ erstreckenden Filamentreihen aus den Spinndüsenöffnungen 1 einer Spinndüsenplatte 2 aus. Die Kunststoffschmelze für die auszuspinnenden Filamente wird zunächst von einem nicht dargestellten Extruder über eine ebenfalls nicht dargestellte Spinnpumpe einem Zuführungskanal 3 zugeführt. Der Zuführungskanal 3 mündet in eine Verteilvorrichtung 4, die im Ausführungsbeispiel (Fig. 1 und 2) als Kleiderbügelverteiler ausgebildet ist und zur Verteilung der zugeführten Kunststoffschmelze auf eine vorläufige Ausspinnbreite Bᵥ vorgesehen ist. Wie in den Fig. 1 und 2 erkennbar ist, hat diese Verteilvorrichtung 4 im Schnitt die Form eines Kleiderbügels mit anschließendem Drosselfeld, so dass eine allmähliche Verbreiterung bis auf die vorläufige Ausspinnbreite Bᵥ stattfindet. Der Verteilvorrichtung 4 ist im Ausführungsbeispiel nach den Fig. 1 und 2 zunächst eine Lochplatte 5 (Filterplatte oder Filterunterstützungsplatte) nachgeschaltet, die über die vorläufige Ausspinnbreite Bᵥ verteilte Lochkanäle 6 für die Kunststoffschmelze aufweist und zur Unterstützung eines Filters 11 dient. Eine solche Lochplatte 5 wird im englischsprachigen Raum auch als "screen support plate" bezeichnet. Der Verteilvorrichtung 4 bzw. der Lochplatte 5 ist im Ausführungsbeispiel nach den Fig. 1 und 2 jeweils ein Paket aus austauschbaren Verteilerplatten 7 nachgeschaltet. Die Verteilerplatten 7 weisen Verteileröffnungen 8 zur Aufnahme der Kunststoffschmelze auf. In den Fig. 1 und 2 ist für jede Verteilerplatte 7 jeweils eine Reihe von Verteileröffnungen 8 erkennbar. Die Erstreckung bzw. die Breite einer Reihe von Verteileröffnungen 8 definiert für jede Verteilerplatte 7 eine Ausspinnbreite Bᵢ Vorzugsweise und im Ausführungsbeispiel weist jede Verteilerplatte 7 in Richtung quer zur Ausspinnbreite mehrere nebeneinander angeordnete Reihen von Verteileröffnungen 8 auf. Dazu wird auf die Fig. 3 verwiesen. In der Fig. 3 ist erkennbar, dass im Ausführungsbeispiel die Verteileröffnungen 8 benachbarter Reihen einer Verteilerplatte 7 versetzt zueinander angeordnet sind.

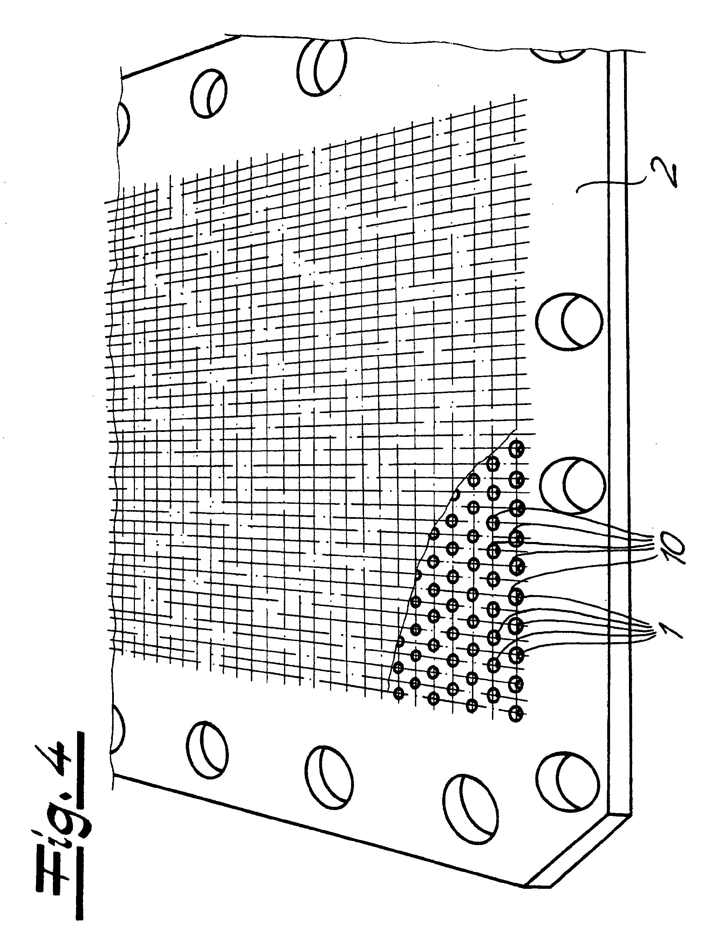

Aus den Fig. 1 und 2 ist ersichtlich, dass die Verteileröffnungen 8 der übereinander angeordneten Reihen benachbarter übereinander angeordneter Verteilerplatten 7 bezüglich der Ausspinnbreite Bᵢ versetzt zueinander angeordnet sind. Einer vergleichenden Betrachtung der Fig. 1, 2 und 3 entnimmt man, dass jede Verteilerplatte 7 sich über die Ausspinnbreite Bᵢ erstreckende Verteilerkanäle 9 aufweist, wobei jeder Verteilerkanal 9 die Verteileröffnungen 8 einer Reihe miteinander verbindet. Im Ausführungsbeispiel nach den Fig. 1 und 2 und nach bevorzugter Ausführungsform grenzt zumindest bei dem Großteil der Verteilerplatten 7 ein Verteilerkanal 9 unmittelbar an eine benachbarte Verteilerplatte 7. Mit anderen Worten bildet diese benachbarte Verteilerplatte 7 eine Wandung des angrenzenden Verteilerkanals 9. Dieser Verteilerkanal 9 verbindet zweckmäßigerweise und im Ausführungsbeispiel in einer Reihe angeordnete Verteileröffnungen 8 der benachbarten Verteilerplatte 7. Im Ergebnis wird bei der bevorzugten Ausführungsform nach den Fig. 1 und 2 erreicht, dass alle Verteileröffnungen 8 und alle Verteilerkanäle 9 der Verteilerplatten 7 miteinander in Verbindung stehen. Den Verteilerplatten 7 ist eine austauschbare Spinndüsenplatte 2 nachgeschaltet, welche Spinndüsenplatte 2 über die endgültige Ausspinnbreite Bₑ verteilte Spinndüsenkanäle 10 mit den zugeordneten Spinndüsenöffnungen 1 aufweist. Fig. 4 zeigt eine Spinndüsenplatte mit Spinndüsenkanälen 10 bzw. Spinndüsenöffnungen 1. Quer zur endgültigen Ausspinnbreite Bₑ sind eine Mehrzahl von Reihen von Spinndüsenkanälen 10 bzw. Spinndüsenöffnungen 1 hintereinander angeordnet. Die Spinndüsenkanäle 10 bzw. die Spinndüsenöffnungen 1 benachbarter Reihen sind im Ausführungsbeispiel versetzt zueinander angeordnet.

Im Betriebszustand der Vorrichtung gemäß Fig. 1 sind der Verteilvorrichtung 4 eine Mehrzahl von austauschbaren Verteilerplatten 7 nachgeschaltet, wobei die von den Verteileröffnungen 8 der einzelnen Verteilerplatten 7 jeweils gebildeten Ausspinnbreiten Bᵢ von der Verteilvorrichtung 4 zur Spinndüsenplatte 2 hin zunehmen. Die vorläufige Ausspinnbreite Bᵥ wird auf diese Weise zur endgültigen Ausspinnbreite Bₑ erweitert bzw. vergrößert. Die Ausspinnbreite Bᵢ nimmt also von Verteilerplatte 7 zu Verteilerplatte 7 zur Spinndüsenplatte 2 hin zu.

Im Betriebszustand der Vorrichtung gemäß Fig. 2 ist der Verteilvorrichtung 4 ebenfalls eine Mehrzahl von austauschbaren Verteilerplatten 7 nachgeschaltet, wobei die von den Verteileröffnungen 8 der einzelnen Verteilerplatten 7 jeweils gebildeten Ausspinnbreiten Bᵢ von der Verteilvorrichtung 4 zur Spinndüsenplatte 2 hin abnehmen. Die vorläufige Ausspinnbreite Bᵥ wird hier auf diese Weise zur endgültigen Ausspinnbreite Bₑ vermindert bzw. reduziert. Die Ausspinnbreite Bᵢ verringert sich hier also von Verteilerplatte 7 zu Verteilerplatte 7 zur Spinndüsenplatte 2 hin.

In den Fig. 1 und 2 ist erkennbar, dass alle Verteileröffnungen 8 und Verteilerkanäle 9 in Strömungsverbindung miteinander stehen und dass im Betrieb der Vorrichtung stets alle Verteileröffnungen 8 und Verteilerkanäle 9 von der Kunststoffschmelze durchströmt bzw. durchspült werden. Die erfindungsgemäße Vorrichtung arbeitet ohne jegliche Abschaltung verschiedener Vorrichtungssegmente.

Nach sehr bevorzugter Ausführungsform und im Ausführungsbeispiel nach den Fig. 1 und 2 ist über die Breite der Verteilvorrichtung 4 eine Mehrzahl von Heizzonen H₁, H₂, H₃, .... Hᵢ vorgesehen. Die Heizzonen Hᵢ sind jeweils separat beheizbar. Dazu ist zweckmäßigerweise jeder Heizzone Hᵢ zumindest einer Heizvorrichtung zugeordnet, die separat einstellbar ist.

## Patentansprüche

1. Vorrichtung zur Herstellung von Filamenten insbesondere aus thermoplastischem Kunststoff, wobei die Filamente in zumindest einer sich über die Ausspinnbreite erstreckenden Filamentreihe aus den Spinndüsenöffnungen (1) einer Spinndüsenplatte (2) austreten,
wobei eine Verteilvorrichtung (4) zur Verteilung einer zugeführten Kunststoffschmelze auf eine vorläufige Ausspinnbreite Bᵥ vorgesehen ist,
wobei der Verteilvorrichtung (4) zumindest eine austauschbare Verteilerplatte (7) mit einer Mehrzahl von über die Ausspinnbreite Bᵢ verteilten Verteileröffnungen (8) nachgeschaltet ist, welche Verteileröffnungen (8) zur Aufnahme der Kunststoffschmelze aus der Verteilvorrichtung (4) vorgesehen sind,
wobei der Verteilerplatte (7) die austauschbare Spinndüsenplatte (2) nachgeschaltet ist, welche Spinndüsenplatte (2) über eine endgültige Ausspinnbreite Bₑ verteilte Spinndüsenkanäle (10) mit den zugeordneten Spinndüsenöffnungen (1) aufweist und
wobei die von den Verteileröffnungen (8) gebildete Ausspinnbreite Bᵢ geringer ist oder größer als die vorläufige Ausspinnbreite Bᵥ und wobei mit Hilfe der Verteilerplatte (7) die vorläufige Ausspinnbreite Bᵥ auf die endgültige Ausspinnbreite Bₑ reduziert oder erweitert wird und durch Auswechseln der Verteilerplatten (7) die gewünschte endgültige Ausspinnbreite Bₑ einstellbar ist.

2. Vorrichtung nach Anspruch 1, wobei die Verteilvorrichtung (4) ein Kleiderbügelverteiler ist.

3. Vorrichtung nach einem der Ansprüche 1 oder 2, wobei der Verteilvorrichtung (4) eine Mehrzahl von austauschbaren Verteilerplatten (7) nachgeschaltet ist und wobei die von den Verteileröffnungen (8) der einzelnen Verteilerplatten (7) jeweils gebildeten Ausspinnbreiten Bᵢ von der Verteilvorrichtung (4) zur Spinndüsenplatte (2) hin abnehmen und die vorläufige Ausspinnbreite Bᵥ auf diese Weise zur endgültigen Ausspinnbreite Bₑ reduziert wird.

4. Vorrichtung nach einem der Ansprüche 1 oder 2, wobei der Verteilvorrichtung (4) eine Mehrzahl von austauschbaren Verteilerplatten (7) nachgeschaltet ist, wobei die von den Verteileröffnungen (8) der einzelnen Verteilerplatten (7) jeweils gebildeten Ausspinnbreiten Bᵢ von der Verteilvorrichtung (4) zur Spinndüsenplatte (2) hin zunehmen und die vorläufige Ausspinnbreite Bᵥ auf diese Weise zur endgültigen Ausspinnbreite Bₑ erweitert wird.

5. Vorrichtung nach einem der Ansprüche 1 bis 4, wobei die Verteileröffnungen (8) übereinander angeordneter benachbarter Verteilerplatten (7) bezüglich der Ausspinnbreite Bᵢ versetzt zueinander angeordnet sind.

6. Vorrichtung nach einem der Ansprüche 1 bis 5, wobei eine Verteilerplatte (7) zumindest einen sich über zumindest einen Teil der Ausspinnbreite Bᵢ erstreckenden Verteilerkanal (9) aufweist, welcher Verteilerkanal (9) zumindest einen Teil der Verteileröffnungen (8) miteinander verbindet.

7. Vorrichtung nach einem der Ansprüche 1 bis 6, wobei eine Verteilerplatte (7) mehrere nebeneinander angeordnete Reihen von Verteileröffnungen (8) aufweist.

8. Vorrichtung nach einem der Ansprüche 1 bis 7, wobei zwischen der Verteilvorrichtung (4) und einer Verteilerplatte (7) eine Lochplatte (5) mit Lochkanälen (6) für die Kunststoffschmelze zwischengeschaltet ist.

9. Vorrichtung nach einem der Ansprüche 1 bis 8, wobei über die Breite der Verteilvorrichtung (4) eine Mehrzahl von Heizzonen (Hᵢ) für die Verteilvorrichtung (4) vorgesehen ist, welche Heizzonen (Hᵢ) jeweils separat beheizbar sind.

## Claims

1. A device for manufacturing filaments, especially of thermoplastic material, wherein the filaments emerge from the spinning-nozzle apertures (1) of a spinning-nozzle plate (2) in at least one row of filaments extending over the spin-out width,
wherein a distributing device (4) is provided for distributing a supplied plastic melt to a preliminary spin-out width Bᵥ,
wherein located after the distributing device (4) is at least one exchangeable distributor plate (7) comprising a plurality of distributor openings (8) distributed over the spin-out width Bᵢ, which distributor openings (8) are provided to receive the plastic melt from the distributing device (4),
wherein located after the distributor plate (7) is the spinning-nozzle plate (2), which spinning-nozzle plate (2) has spinning-nozzle channels (10) with the associated spinning-nozzle apertures (1) distributed over the final spin-out width Bₑ and
wherein the spin-out width Bᵢ formed by the distributor openings (8) is smaller or larger than the preliminary spin-out width Bᵥ and wherein the preliminary spin-out width Bᵥ is reduced or expanded to the final spin-out width Bₑ with the aid of the distributor plate (7) and the desired final spin-out width Bₑ can be adjusted by exchanging the distributor plates (7).

2. The device according to claim 1, wherein the distributing device (4) is a coat-hanger distributor.

3. The device according to any one of claims 1 or 2, wherein located after the distributing device (4) is a plurality of exchangeable distributor plates (7) and wherein the spin-out widths Bᵢ formed respectively by the distributor openings (8) of the individual distributor plates (7) decrease from the distributing device (4) to the spinning-nozzle plate (2) and the preliminary spin-out width Bᵥ is reduced to the final spin-out width Bₑ in this manner.

4. The device according to any one of claims 1 or 2, wherein located after the distributing device (4) is a plurality of exchangeable distributor plates (7), wherein the spin-out widths Bᵢ formed respectively by the distributor openings (8) of the individual distributor plates (7) increase from the distributing device (4) to the spinning-nozzle plate (2) and the preliminary spin-out width Bᵥ is expanded to the final spin-out width Bₑ in this manner.

5. The device according to any one of claims 1 to 4, wherein the distributor openings (8) of adjacent distributor plates (7) arranged one above the other are arranged offset with respect to one another with regard to the spin-out width Bᵢ.

6. The device according to any one of claims 1 to 5, wherein one distributor plate (7) has at least one distributor channel (9) extending over at least a part of the spin-out width Bᵢ, which distributor channel (9) interconnects at least some of the distributor openings (8).

7. The device according to any one of claims 1 to 6, wherein one distributor plate (7) has a plurality of rows of distributor openings (8) arranged adjacent to one another.

8. The device according to any one of claims 1 to 7, wherein a perforated plate (5) with perforated channels (6) for the plastic melt is interposed between the distributing device (4) and a distributor plate (7).

9. The device according to any one of claims 1 to 8, wherein a plurality of heating zones (Hᵢ) for the distributing device (4) is provided over the width of the distributing device (4), which heating zones (Hᵢ) can each be heated separately.

## Revendications

1. Dispositif pour fabriquer des filaments, en particulier à partir de plastique thermoplastique, les filaments sortant dans au moins une rangée de filaments s'étendant sur la largeur de filage des ouvertures de filière (1) d'une plaque de filière (2),
un dispositif répartiteur (4) étant prévu pour la répartition d'une masse fondue de plastique amenée sur une largeur de filage Bᵥ provisoire,
le dispositif répartiteur (4) étant monté en amont d'au moins une plaque de répartition (7) remplaçable avec une pluralité d'ouvertures de répartition (8) dispersées sur la largeur de filage Bᵢ, lesquelles ouvertures de répartition (8) sont prévues pour le logement de la masse fondue en plastique provenant du dispositif répartiteur (4),
la plaque de répartition (7) étant montée en amont de la plaque de filière (2) remplaçable, laquelle plaque de filière (2) présentant des canaux de filière (10) répartis sur une largeur de filage définitive Bₑ avec les ouvertures de filière (1) attribuées et
la largeur de filage Bᵢ formée par les ouvertures de répartition (8) étant plus petite ou plus grande que la largeur de filage provisoire Bᵥ et la largeur de filage provisoire Bᵥ étant réduite ou augmentée à l'aide de la plaque de répartition (7) jusqu'à la largeur de filage définitive Bₑ et la largeur de filage Bₑ définitive Bₑ souhaitée pouvant être réglée par le remplacement des plaques de répartition (7).

2. Dispositif selon la revendication 1, le dispositif répartiteur (4) étant un répartiteur pour cintre.

3. Dispositif selon l'une des revendications 1 ou 2, le dispositif répartiteur (4) étant monté en amont d'une pluralité de plaques de répartition (7) remplaçables et les largeurs de filage Bᵢ, respectivement formées par les ouvertures de répartition (8) des plaques de répartition (7) individuelles diminuant depuis le dispositif répartiteur (4) en direction de la plaque de filière (2) et la largeur de filage provisoire Bᵥ étant réduite de cette façon à la largeur de filage définitive Bₑ.

4. Dispositif selon l'une des revendications 1 ou 2, le dispositif répartiteur (4) étant monté en amont d'une pluralité de plaques de répartition (7) remplaçables, les largeurs de filage Bᵢ, respectivement formées par les ouvertures de répartition (8) des plaques de répartition (7) individuelles augmentant depuis le dispositif répartiteur (4) en direction de la plaque de filière (2) et la largeur de filage provisoire Bᵥ étant augmentée de cette façon jusqu'à la largeur de filage définitive Bₑ.

5. Dispositif selon l'une des revendications 1 à 4, les ouvertures de répartition (8) de plaques de répartition (7) voisines disposées les unes au-dessus des autres étant disposées de façon décalée entre elles par rapport à la largeur de filage Bᵢ.

6. Dispositif selon l'une des revendications 1 à 5, une plaque de répartition (7) présentant au moins un canal répartiteur (9) s'étendant sur au moins une partie de la largeur de filage Bᵢ, lequel canal répartiteur (9) relie au moins une partie des ouvertures de répartition (8) entre elles.

7. Dispositif selon l'une des revendications 1 à 6, une plaque de répartition (7) présentant plusieurs rangées, disposées les unes à côté des autres, d'ouverture de répartition (8).

8. Dispositif selon l'une des revendications 1 à 7, une plaque perforée (5) avec des canaux perforés (6) pour la masse fondue de plastique étant intercalée entre le dispositif répartiteur (4) et une plaque de répartition (7).

9. Dispositif selon l'une des revendications 1 à 8, une pluralité de zones de chauffage (Hᵢ) étant prévue pour le dispositif répartiteur (4) sur la largeur de ce dispositif, lesquelles zones de chauffage (Hᵢ) peuvent être chauffées respectivement séparément.
